Europäisches Patentamt

European Patent Office

Office européen des brevets

(19)

(11) Veröffentlichungsnummer: **0 013 375**
A1

(12) **EUROPÄISCHE PATENTANMELDUNG**

(21) Anmeldenummer: 79105137.8

(22) Anmeldetag: 13.12.79

(51) Int. Cl.³: **F 16 L 59/10**
**H 02 G 3/04**

(30) Priorität: 11.01.79 DE 2900796

(43) Veröffentlichungstag der Anmeldung:
23.07.80 Patentblatt 80/15

(84) Benannte Vertragsstaaten:
AT BE CH DE FR GB IT LU NL SE

(71) Anmelder: Zipper-Technik GmbH
Waldstrasse 55/57
D-6078 Neu-Isenburg(DE)

(72) Erfinder: Luedtke, Siegfried
Arnulfstrasse 142
D-8000 München 19(DE)

(74) Vertreter: Selting, Günther, Dipl.-Ing. et al,
Deichmannhaus am Hauptbahnhof
D-5000 Köln 1(DE)

(54) Schlauchförmige Umhüllung.

(57) Die schlauchförmige Umhüllung (10) dient zur Ummantelung von Rohren oder Kabelgruppen. Sie weist einen Reißverschluß (12) aus zwei längs eines Folienmantels (11, 17, 19) angeordneten Profilteilen (13, 14) auf, die miteinander verhakbar sind. Das eine Profilteil (13) ist mit einer den geschlossenen Reißverschluß (12) von innen bedeckenden Lasche (20) versehen, die an ihrer Außenseite ein Haftmittel (21) trägt und mit ihrem freien Ende an der Innenwand des Folienmantels (11, 17, 19) festklebbar ist.

EP 0 013 375 A1

## Schlauchförmige Umhüllung

Die Erfindung betrifft eine schlauchförmige Umhüllung mit einem längslaufenden Reißverschluß aus zwei längs eines Folienmantels angeordneten Profilteilen, die miteinander verhakbar sind, und mit einer unter dem einen Profilteil angeordneten, den geschlossenen Reißverschluß von innen bedeckenden Lasche.

Zum Zusammenfassen und Umhüllen von Kabelgruppen und Kabelbäumen sind Umhüllungen bekannt, die aus einem Folienmantel bestehen, der längslaufende Profilteile aufweist. Der Folienmantel wird um das zu umschließende Bündel herumgelegt und anschließend der Reißverschluß durch Ineinanderstecken seiner Profilteile geschlossen. Das Schließen des Reißverschlusses kann mit einem besonderen Schiebewerkzeug oder ggf. auch von Hand erfolgen. Da der Reißverschluß wieder geöffnet werden kann, sind die von der Umhüllung umschlossenen Teile auch nachträglich jederzeit wieder zugänglich.

- 2 -

Die bekannten schlauchförmigen Umhüllungen haben den Nachteil, daß der Reißverschluß sich unbeabsichtigt öffnen kann. Dies kann beim Verlegen der umhüllten Kabelbäume geschehen , wobei der Reißverschluß beim Biegen oder Formen des Kabelbaumes aufplatzen kann,oder infolge extremer Temperaturen, bei denen sich die Härte des Materials der Umhüllung bzw. des Reißverschlusses ändert. Um das Aufplatzen des Reißverschusses zu verhindern, behelfen sich die Monteure gelegentlich damit,  daß die den Kabelbaum oder ein anderes Bündel enthaltende geschlossene schlauchförmige Umhüllung während der Verlegearbeiten vorübergehend mit einem Band oder einem Klebestreifen umwickelt wird. Die damit verbundene Mehrarbeit ist zeitraubend und lästig.

Aufgabe der Erfindung ist es, eine schlauchförmige Umhüllung der eingangs genannten Art zu schaffen, die eine zusätzliche Sicherung  gegen Aufplatzen des geschlossenen Reißverschlusses besitzt.

Zur Lösung dieser Aufgabe ist erfindungsgemäß vorgesehen, daß die Lasche an ihrer Außenseite ein Haftmittel trägt und mit ihrem freien Ende an dem Innenrand des Folienmantels festklebbar ist.

- 3 -

Die Lasche erfüllt somit eine Doppelfunktion. Einmal deckt sie den Reißverschluß gegenüber dem im Inneren der geschlossenen Umhüllung befindlichen Gegenständen, wie Kabeln, Rohren u.dgl. ab, und zum anderen bildet sie unterhalb des Reißverschlusses eine Brücke, deren beide Enden an dem Folienmantel haften. Da die Klebeverbindung nur auf Scherung beansprucht und von dem umhüllten Bündel gegen die Innenwand der Umhüllung gedrückt wird, bietet sie einen wirksamen Schutz gegen ein Auseinanderziehen der beiden Profilteile. Andererseits läßt sich die Lasche nach dem gewollten Öffnen des Reißverschlusses leicht von der Innenseite der Umhüllung abziehen, so daß sie keine abziehen, so daß sie keine Behinderung für das nachträgliche Öffnen der Umhüllung bildet.

Das Haftmittel kann unmittelbar auf die Lasche aufgetragen werden, wobei es zweckmässigerweise anschließend mit einem abziehbaren Schutzstreifen bedeckt wird. Bei einer bevorzugten Ausführungsform der Erfinfung ist an der Lasche ein beidseitig klebender Doppelklebestreifen festgeklebt, dessen äußere Klebeschicht mit einem abziehbaren Schutzstreifen bedeckt ist. Der Doppelklebestreifen kann nach dem Herstellen der schlauchförmigen Umhüllung auf deren Lasche aufgeklebt werden, so daß dieselbe Umhüllung wahlweise mit oder ohne Klebestreifen geliefert werden kann. Die Anbringung des Klebestreifens ist auch

- 4 -

nachträglich bei herkömmlichen Umhüllungen möglich.

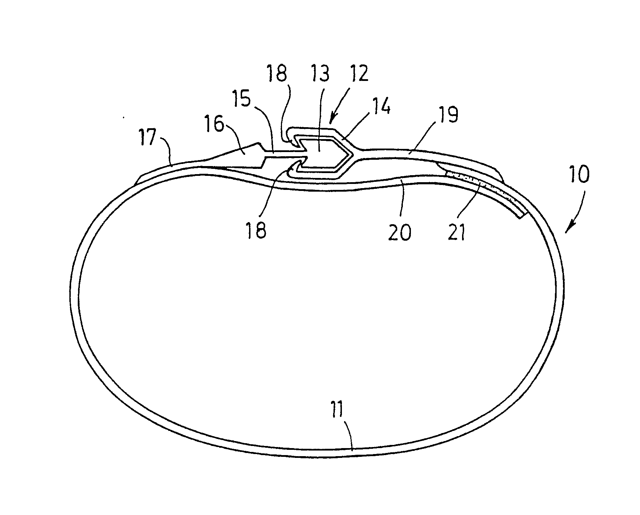

Im Folgenden wird ein Ausführungsbeispiel der Erfindung unter Bezugnahme auf die einzige Figur der Zeichnung näher erläutert.

In der Zeichnung ist eine Stirnansicht einer schlauchförmigen Umhüllungen bei geschlossenem Reißverschluß dargestellt.

Die schlauchförmige Umhüllung 10 ist als Endlosprofil ausgebildet. Sie besteht aus einem Folienstreifen 11, an dem die Profilteile 13 und 14 des Reißverschlusses 12 befestigt sind. Das Profilteil 13 besteht aus einer Verdickung in Form einer hinterschnittenen Pfeilspitze, deren rückwärtiges Ende über einen Steg 15 mit einer etwa dreieckförmigen Verdickung 16 verbunden ist. Ein Streifen 17 ist an den Folienstreifen 11 angeschweißt und bildet einen Teil des Folienmantels.

Das andere Profilteil 14 umgreift die Verdickung des ersten Profilteiles 13 und rastet mit den beiden Nasen 18 in den Hinterschneidungen ein. Das rückwärtige Ende des Profil-

- 5 -

teiles 14 ist über einen Streifen 19 mit dem Folienstreifen 11 verschweißt und bildet somit ebenfalls einen Bestandteil des Folienstreifens.

Unterhalb des Reißverschlusses 12 befindet sich die Lasche
20, die von einer Verlängerung des Folienstreifens 11
gebildet wird. Die Lasche 20 ist an dem Folienteil 17
fest, bildet eine Unterlappung für den Reißverschluß 12
und ihr freies Ende legt sich gegen die Innenseite
des Folienstreifens 11 bzw. des Streifens 19.

An der Außenseite des freien Endes der Lasche 12 ist ein
Doppelklebestreifen 21 fest aufgeklebt. Im geöffneten
Zustand der schlauchförmigen Umhüllung ist die Oberfläche des Doppelklebestreifens 21 zunächst mit einem
(nicht dargestellten) Schutzstreifen bedeckt. Dieser
wird kurz vor dem Schließen des Reißverschlusses 12
abgezogen. Wird anschließend der Reißverschluß geschlossen,
dann legt sich die freie Klebeseite des Doppelklebestreifens 21 gegen die Innenwand des Folienstreifens 11, 19,
um an dieser festzukleben. Auf diese Weise ist die den
Reißverschluß 12 unterbrückende Lasche 20 an beiden Enden
mit dem Folienmantel 11, 17, 19 verbunden, und sie verhindert ein Aufplatzen des Reißverschlusses 12 bzw. ein
unbeabsichtigtes Auseinanderziehen der Profilteile 13,14.

- 6 -

Die gesamte Umhüllung, mit Ausnahme des Klebestreifens 21, kann aus Kunststoff, beispielsweise aus Polyvinyl- chlorid, hergestellt werden.

Ansprüche

1. Schlauchförmige Umhüllung mit einem längslaufenden
Reißverschluß aus zwei längs eines Folienmantels
angeordneten Profilteilen, die miteinander verhakbar
sind und mit einem mit dem einen Profilteil verbundenen, den geschlossenen Reißverschluß von innen
bedeckenden Lasche, d a d u r c h  g e k e n n -
z e i c h n e t , daß die Lasche (20) an ihrer Außenseite ein Haftmittel trägt und mit ihrem freien
Ende an der Innenwand des Folienmantels festklebbar
ist.

2. Schlauchförmige Umhüllung nach Anspruch 1, dadurch
gekennzeichnet, daß an der Lasche (20) ein beidseitig klebender Doppelklebestreifen (21) festgeklebt ist, dessen äußere Klebeschicht mit einem abziehbaren Schutzstreifen bedeckt ist.

0013375

1/1

Europäisches Patentamt

**0013375**

Nummer der Anmeldung

**EP 79 10 5137**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | **DE - C - 1 037 540** (SIEMENS-SCHUCKERTWERKE) <br> * Spalte 2, Zeile 48 - Spalte 4, Zeile 13 * | 1 |
| | **DE - A - 2 529 900** (TRIEB) <br> * Seite 1, Zeilen 9-18; Seite 2, Zeile 26 - Seite 3, Zeile 7 * | 1,2 |
| | **GB - A - 890 954** (TROXLER) <br> * Ansprüche 1,2 * | 1,2 |
| | **FR - A - 1 491 066** (MEIER-SCHENK) <br> * Seite 2, linke Spalte, Zeile 47 - rechte Spalte, Zeile 50 * | 2 |

### KLASSIFIKATION DER ANMELDUNG (Int. Cl.)

F 16 L 59/10
H 02 G  3/04

### RECHERCHIERTE SACHGEBIETE (Int. Cl.)

F 16 L
H 02 G

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 11-04-1980 | ATKINS |

EPA form 1503.1  06.78